# EUROPÄISCHE PATENTANMELDUNG

(11) **EP 1 834 859 A1**
(43) Veröffentlichungstag der Anmeldung: **19.09.2007**
(21) Anmeldenummer: 06111354.4
(22) Anmeldetag: 17.03.2006
(51) Int. Cl.: B62D 1/12

(54) **Eingabegerät für ein elektronisches Lenksystem eines virtuellen oder realen Fahrzeuges**

(71) Anmelder: Berner Fachhochschule Hochschule für Technik und Architektur Biel, 2501 Biel (CH)
(72) Erfinder: Aeberhard, Hannes, 2502 Biel (CH); Bécheiraz, Olivier, 2502 Biel (CH); Debrunner, Daniel, 3375 Inkwil (CH); Gerster, Bernhard, 2554 Meinisberg (CH); Stemmler, Jochen, 2503 Biel (CH); Rohner, Linus, 2503 Biel (CH)
(74) Vertreter: Bremi, Tobias Hans

(57) **Zusammenfassung**

Ein Eingabegerät für ein elektronisches Lenksystem eines Fahrzeuges umfasst mindestens einen Sidestick (1) zur Eingabe eines Steuerungsbefehls, Messmittel zur Messung des Steuerungsbefehls und Rückmeldemittel zur Rückmeldung von Richtungsparametern. Der Sidestick (1) ist an mindestens einem Ende (11) mit einem Führungsring (10) verbunden. Der Führungsring (10) umgibt den Sidestick (1) mindestens teilweise. Es ist damit ein einfach zu bedienendes, vor Fehleinflüssen gut geschütztes Bedieninstrument geschaffen, welches vorzugsweise für eine einfache Rückmeldefunktion der Steuerposition durch Stellung des Führungsringes (10) und damit des Sidesticks (1) ausgelegt werden kann.

## Beschreibung

### Technisches Gebiet der Erfindung

Die vorliegende Erfindung betrifft ein Eingabegerät für ein elektronisches Lenksystem eines virtuellen oder realen Fahrzeuges gemäss den Merkmalen des Oberbegriffs des Anspruchs 1.

### Stand der Technik

Aus dem Stand der Technik sind eine Vielzahl von Eingabegeräten für elektrische Lenksysteme bekannt.

Insbesondere sind Lenksysteme bekannt, welche dem Fahrer eines Fahrzeuges Rückmeldungen über die Lenkkraft oder die Radposition geben. Dafür wurden sogenannte Force-Feedback-Systeme entwickelt, welche diese Aufgabe erfüllen. Als Rückmeldegrösse kann entweder die effektiv am Lenkgetriebe erzeugte Lenkkraft (nachstehend Kraftrückmeldung genannt), oder der effektive Radeinschlagswinkel (nachstehend Wegrückmeldung genannt) verwendet werden. Die Rückmeldung kann insbesondere elektronisch, mechanisch oder hydraulisch erfolgen. Force Feedback wird neben dem Einsatz in Fahrzeugen auch bei Simulatoren oder Computerspielen eingesetzt. Die wichtigste Aufgabe der Force-Feedback-Systeme für bodengebundene Kraftfahrzeuge ist es, den Fahrer über den Strassenzustand, die Fahrzeugquerbeschleunigung und die Haftungsreserve der Räder zu informieren. Für die Anwendung in Fahrzeugen für körperbehinderte Menschen wird typischerweise ein sogenannter Joystick oder Sidestick zur Eingabe eines Lenksignals verwendet.

Ein solches System ist beispielweise von EP 1 595 766 her bekannt. Dabei wird ein Fahrzeug aufgrund der Betätigung eines Joysticks gelenkt. Über ein Reduktionsgetriebe wird das Lenksignal einem Potentiometer zugeführt, welches dann einen elektrischen Motor steuert. Dieser Motor ist über ein Getriebe mit der Lenksäule verbunden. Über mechanische Elemente wird die Drehbewegung in eine lineare Bewegung konvertiert. Die lineare Bewegung wird dann über Kabelstränge dem Joystick mechanisch zugeführt, so dass der Benutzer eine Rückmeldung der Bewegung erfährt. Nachteilig bei diesem System ist jedoch, dass es nicht auf den Benutzer einstellbar ist.

GB 2 314 607 offenbart ein weiteres Lenksystem mit einem Joystick. Der Joystick kann in der Fahrzeug-Querachse bewegt werden. Über ein Fusspedal und einen Schwenkhebel kann das Fahrzeug beschleunigt oder verzögert werden. Ein am Joystick angebrachter Aktuator kann eine Reaktionskraft auf den Joystick ausüben. Nachteilig bei diesem System ist, dass der Fahrer das Fahrzeug mit den Händen und auch mit den Beinen steuern muss. Zudem kann der Joystick unbeabsichtigt betätigt werden, was sich negativ auf die Fahrsicherheit auswirkt.

WO 2005/120929 offenbart einen weiteren Joystick. Um eine Lenkbewegung auszuführen, kann der Joystick kreisförmig in einer Führung betätigt werden. Es ist ein Nachteil dieses Joysticks, dass der Benutzer den ganzen Arm bewegen muss, was insbesondere bei langen Fahrten Ermüdungserscheinungen beim Fahrer hervorruft.

Bei sogenannten Vierwege-Joysticks ist die Handhabung für den Benutzer zudem sehr schwierig zu erlernen. Denn der Joystick muss nach vorne gedrückt werden, um das Fahrzeug zu beschleunigen und zudem muss der Joystick bei einer Kurvenfahrt noch nach rechts oder links bewegt werden. Dies ein Nachteil, denn es ist aufgrund unkontrollierter Bewegungen leicht möglich, mit einem Joystick dieser Art die Kontrolle über das Fahrzeug zu verlieren

Ein weiteres Problem mit Eingabegeräten des Standes der Technik ergibt sich aus den mechanischen Gegebenheiten, welche meist eine grosse Baugrösse erfordern.

### Darstellung der Erfindung

Ausgehend von diesem Stand der Technik liegt der Erfindung die Aufgabe zugrunde, ein Eingabegerät bereitzustellen, welches mit variablem Kraftaufwand einfach und sicher bedienbar ist.

Es ist eine weitere Aufgabe der vorliegenden Erfindung ein Verfahren anzugeben, mit welchen ein Eingabegerät betrieben werden kann.

Diese Aufgabe löst ein Eingabegerät für ein elektronisches Lenksystem mit den Merkmalen des Patentanspruchs 1. Vorteilhafte Ausgestaltungen der Erfindung sind in den abhängigen Ansprüchen angegeben.

Ein Eingabegerät für ein elektronisches Lenksystem eines Fahrzeuges umfasst mindestens einen Sidestick zur Eingabe eines Steuerungsbefehls, Messmittel zur Messung des Steuerungsbefehls und Rückmeldemittel zur Rückmeldung von Richtungsparametern. Der Sidestick ist an mindestens einem Ende mit einem Führungsring verbunden. Der Führungsring umgibt den Sidestick mindestens teilweise.

Es ist damit ein einfach zu bedienendes, vor Fehleinflüssen gut geschütztes Bedieninstrument geschaffen, welches vorzugsweise für eine einfache Rückmeldefunktion der Steuerposition durch Stellung des Führungsringes und damit des Sidesticks ausgelegt werden kann.

Ein erfindungsgemässes Eingabegerät kann durch den Benutzer in einfacher Weise bedient werden. Zudem ist das Eingabegerät durch den Führungsring gegen unerwünschte Bewegungen geschützt. Der so angeordnete Sidestick kann durch eine sehr kleine Bewegung des Benutzers betätigt werden. Zudem kann das Eingabegerät auch durch einen Benutzer bedient werden, der nur sehr wenig Kraft auf den Sidestick aufbringen kann.

Weitere vorteilhafte Ausführungsformen sind in den Unteransprüchen gekennzeichnet.

### Kurze Beschreibung der Zeichnungen

Die Erfindung wird im folgenden anhand der Zeichnungen näher beschrieben. Es zeigt:
- Fig. 1: eine schematische Ansicht eines Eingabegerätes gemäss der vorliegenden Erfindung;
- Fig. 2: eine perspektivische Ansicht eines Ausführungsbeispiels gemäss der vorliegenden Erfindung;
- Fig. 3: eine perspektivische Ansicht des Ausführungsbeispiels gemäss Fig. 2;
- Fig. 4: eine perspektivische Ansicht des Ausführungsbeispiels gemäss Fig. 2;
- Fig. 5: eine schematische Ansicht der Anordnung zweier Eingabegeräte zur Erläuterung der Offseteinstellung bei Geradeausfahrt;
- Fig. 6a-6c: detaillierte Ansichten eines Joysticks gemäss der vorliegenden Erfindung;

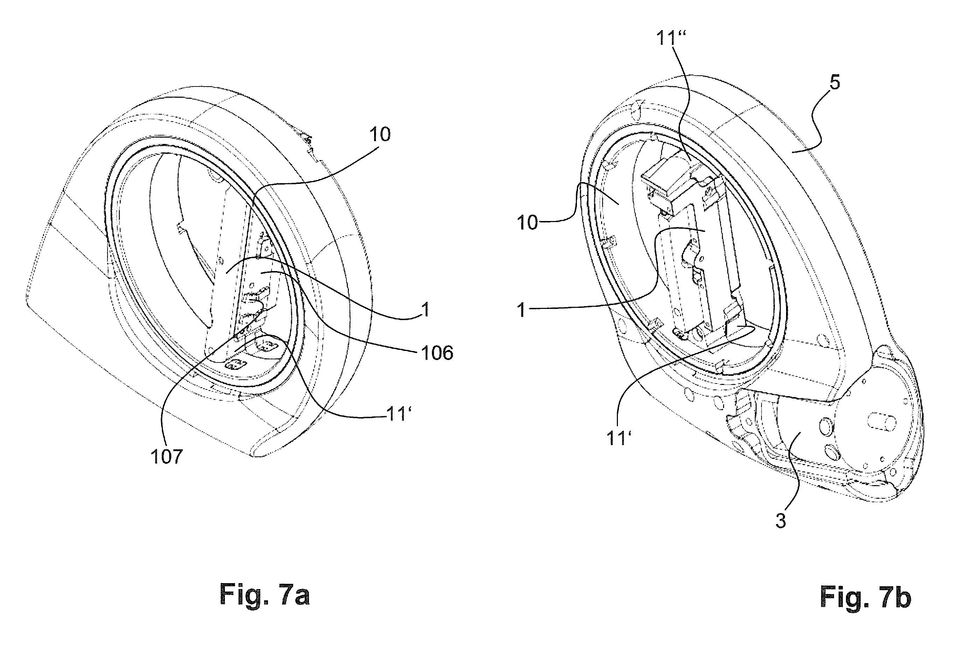

- Fig. 7a-7b: perspektivische Ansichten eines Eingabegerätes gemäss der vorliegenden Erfindung;
- Fig. 8: eine schematische Schnittdarstellung eines Eingabegerätes gemäss der vorliegenden Erfindung;

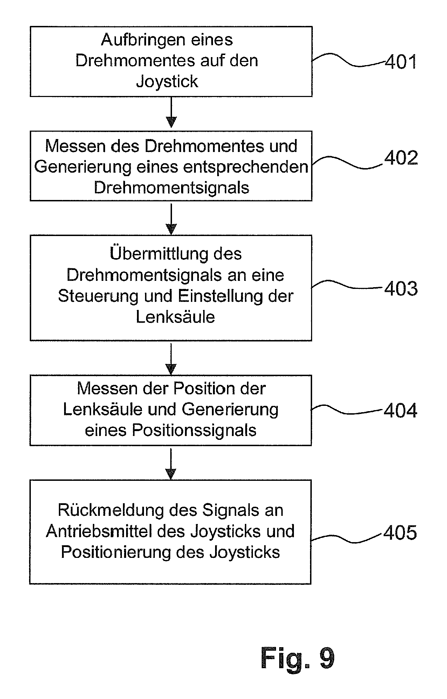

- Fig. 9: ein Flussdiagramm eines Betätigungsvorgangs gemäss der vorliegenden Erfindung;
- Fig. 10: eine schematische Darstellung eines weiteren Ausführungsbeispiels gemäss der vorliegenden Erfindung; und
- Fig. 11: eine Seitenansicht eines weiteren Ausführungsbeispiels eines Eingabegerätes gemäss der vorliegenden Erfindung.

### Beschreibung eines Ausführungsbeispiels

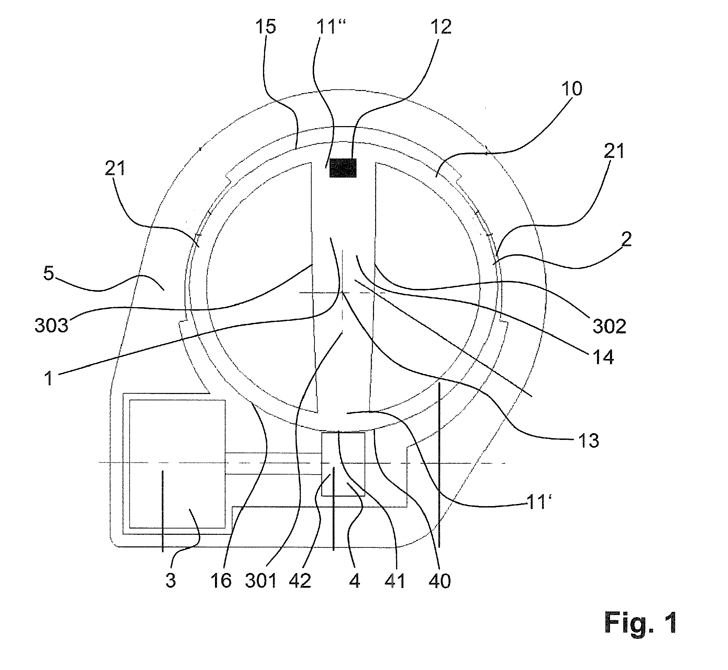

Figur 1 zeigt eine schematische Ansicht eines Eingabegerätes gemäss der vorliegenden Erfindung. Dabei umfasst das Eingabegerät einen Sidestick 1, der auch als Steuerknüppel oder Joystick bezeichnet werden kann, eine Führung 20, einen Antrieb 3, ein Getriebe 4, ein Gehäuse 5 und im Joystick integrierte Messmittel.

Das Eingabegerät kann als Bedienungsgerät für Fahrzeuglenkungen mit elektronischer Übertragung verwendet werden. Solche Systeme werden auch als steer-by-wire-Systeme bezeichnet. Das erfindungsgemässe Eingabegerät dient hier als Eingabemittel eines Steuerungsbefehls in die Steuerung eines bodengebundenen Fahrzeuges, beispielsweise eines Kraftfahrzeuges. Alternativ kann das erfindungsgemässe Eingabegerät auch für Computerspiele oder andere Fortbewegungsmittel, wie beispielsweise Flugzeuge, dienen.

Der Sidestick 1 umfasst einen von einem Benutzer zu umfassenden Handgriff 14 oder Steg, der mit beiden Enden 11' und 11'' mit einem Führungsring 10 fest verbunden ist. Alternativ kann der Sidestick 1 oder Joystick auch nur mit dem unteren Ende 11' oder nur mit dem oberen Ende 11" mit dem Führungsring 10 verbunden sein, vorteilhafterweise mit unteren Ende 11', welches nahe des Getriebeeingriffs angeordnet ist. Der Sidestick 1 hat eine Vorderseite 301, eine linke Aussenseite 302, eine rechte Aussenseite 303 und eine in der Figur 1 nicht sichtbare Hinterseite 304. Ein Mittelpunkt 13 ist der Mittelpunkt des Sidesticks 1 und zugleich der Mittelpunkt des Führungsrings 10. Der Mittelpunkt 13 ist zugleich der Drehpunkt für den Führungsring 10.

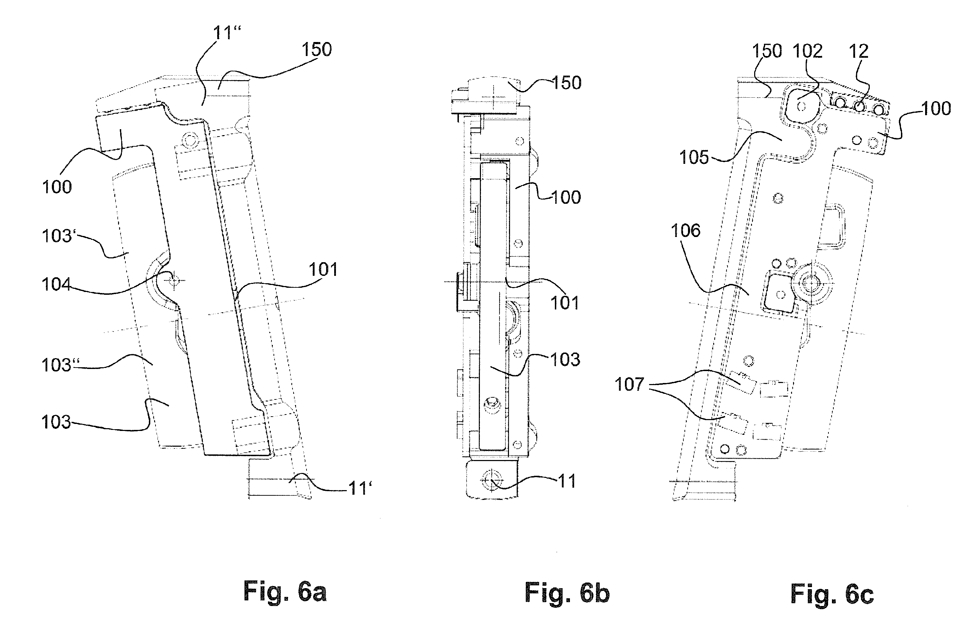

Figuren 6a bis 6c zeigen ein Ausführungsbeispiel des erfindungsgemässen Joysticks ohne eine Handgriffschale. Der erfindungsgemässe Joystickgriff ist in dieser Ausführungsform mehrteilig ausgestaltet. In anderen Ausführungsformen kann der Joystick auch einstückig ausgestaltet sein.

In Fig. 6a und 6c ist besonders gut erkennbar, dass der Joystick 1 aus zwei Teilen besteht, nämlich aus einem vorderen Teil 100 und einem hinteren Teil 150. Vorzugsweise ist der hintere Teil 150 an einem ersten Ende 11' fest mit dem Führungsring 10 verbunden. Mit einem zweiten Ende 11" ist das hintere Teil 150 vorzugsweise fest mit dem Führungsring 10 verbunden. Das vordere Teil 100 ist mit dem Führungsring 10 nicht verbunden.

In alternativen Ausführungsbeispielen ist es auch möglich, das erste Ende 11' gelenkig und das zweite Ende 11" fest mit dem Führungsring 10 zu verbinden oder aber auch das erste Ende 11' fest und das zweite Ende 11" gelenkig mit dem Führungsring 10 zu verbinden.

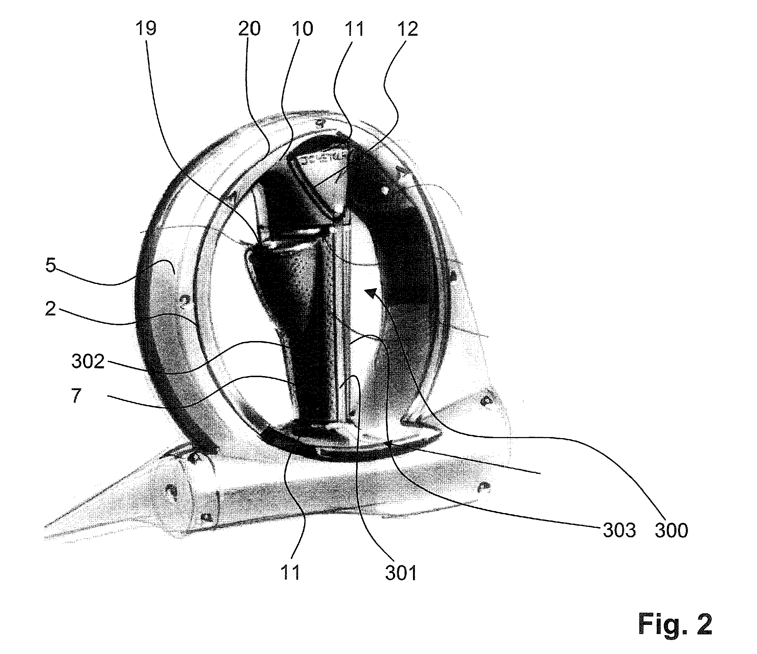

Das vordere Teil 100 ist mittels einer Lagerstelle 101 drehbar mit dem hinteren Teil 150 verbunden. Im oberen Bereich des vorderen Teils 100 ist ein Gummipuffer angeordnet, der mit einem Führungselement 102 geführt wird.. Ein weiterer Gummipuffer ist in der Nähe des ersten Gummipuffers angeordnet und wird mit einem Führungselement 103 geführt. Die Gummipuffer bilden eine federnde Verbindung zwischen dem vorderen Teil 100 und dem hinterem Teil 150. Das vordere Teil 100 kann mit Griffschalen 7 verbunden werden. Solche Griffschalen 7 sind beispielsweise in den Figuren 2 bis 4 ersichtlich. Bei einem Lenkmanöver wird ein Drehmoment auf die Griffschalen 7 ausgeübt. Aufgrund der mechanischen Verbindung der Griffschalen 7 mit dem vorderen Teil 100 wird das Drehmoment auf das vordere Teil 100 übertragen. Da das vordere Teil 100 drehbar mit dem hinteren Teil 150 verbunden ist, resultiert das Drehmoment in einer leichten Drehung des vorderen Teils 100 gegenüber dem hinteren Teil 150. Die leichte Drehung ist allerdings nur im Federbereich des Gummipuffers möglich. Bei der beschriebenen Anordnung von zwei Gummipuffern wird jeder der Gummipuffer auf Druck beansprucht. Die Gummipuffer liegen in diesem Fall lose, also ohne feste Verbindung zwischen dem vorderen Teil 100 und dem hinteren Teil 150. Alternativ kann der Gummipuffer sowohl mit einer Zugkraft als auch mit einer Druckkraft belastet werden. In dieser alternativen Ausführungsform sind zwei Gummipuffer angeordnet, wobei der eine bei einer Drehung in die eine Richtung mit einer Zugkraft und der andere bei einer Drehung in die gleiche Richtung mit einem Druckkraft belastet wird. Hier müssen die Gummipuffer mit dem vorderen Teil 100 und dem hinteren Teil 150 verbunden sein. Der Grad der Verdrehung zwischen dem vorderen Teil 100 und dem hinteren Teil 150 ist vom angelegten Drehmoment und von den Materialeigenschaften des Gummipuffers abhängig.

Statt Gummipuffer können auch Federn, wie Zugfedern, Druckfedern und insbesondere Tellerfedern eingesetzt werden.

An der Stelle, welche mit dem Bezugszeichen 106 versehen ist, können eine Leiterplatte und/oder andere elektronische Bauteile angeordnet werden, welche die gemessenen Signale verarbeiten können. In die Buchsen 107, von welchen in diesem Ausführungsbeispiel vier angeordnet sind, sind mehrere Stecker einsteckbar. Über die Stecker und ein nachfolgendes Kabel können elektrische Signale vom Joystick übermittelt werden.

Die Drehachse zwischen dem vorderen Teil 100 und dem hinteren Teil 150 ist parallel oder konzentrisch zur Drehachse des Joysticks 1, welcher um einen Mittelpunkt 13 drehbar ist. Die maximale Verdrehung der Griffschalen 7 bzw. des vorderen Teils 100 durch das Ausüben eines Drehmomentes wird durch den Federweg des Gummipuffers begrenzt. Alternativ können mechanische Anschlagmittel eingesetzt werden, durch welche die Bewegung zusätzlich begrenzt werden kann.

Im oberen Bereich des hinteren Teils 150 ist die Drehmomentsensorik 12 angeordnet. Diese Drehmomentsensorik 12 kann ein auf das vordere Teil 100 aufgebrachtes Drehmoment messen. Ein elektrisches Drehmomentsignal, welches vom Sensor ausgegeben wird, repräsentiert die Grösse des Drehmoments und wird daher als Drehmomentsignal bezeichnet. Dies kann durch Hallsensoren berührungsfrei ermittelt werden.

Alternativ kann das hintere Teil 150 bzw. der Steg auch nur mit einem Ende 11 mit dem Führungsring 10 verbunden sein, vorteilhafterweise mit dem Ende 11', welches in der Nähe des Eingriffes des Getriebes 3 angeordnet ist. Dieses Ende 11' ist starr mit dem Führungsring 10 verbunden. Der vordere Teil 100 ist wie beim oben schon erwähnten Ausführungsbeispiel drehbar mit dem hinteren Teil 150 verbunden. Die Drehmomentsensorik ist in diesem Ausführungsbeispiel im Führungsring 10 im Bereich des zweiten Endes 11" angeordnet und kann ein auf den Joystick ausgeübtes Drehmoment messen.

Der Führungsring 10 übernimmt die Kraftübertragung und die Führung des Joysticks bzw. Sidesticks. Die Verzahnung für die Kraftübertragung ist auf dem gesamten Umfang des Führungsringes angebracht. Die radiale Führung des Führungsring 10 erfolgt über die Verzahnung, welche an der Mantelfläche des Führungsring 10 angeordnet ist. Somit kann der Joystick frei um seinen gesamten Umfang positioniert werden. In axialer Richtung ist der Joystick durch das Gehäuse geführt.

Wie in Figur 1 erkennbar kann in einer alternativen Lösung der Führungsring 10 auf seiner Aussenseite in mehrere, hier zwei, Bereiche aufgeteilt werden, nämlich in einen Führungsbereich 15 und in einen Kraftübertragungsbereich 16.

Die Führung 20 ist in einem oberen Bereich des Gehäuses 5 gegenüber dem Getriebe 4 angeordnet und dient der Aufnahme des Führungsringes 10 mit dem Sidestick 1. Vorzugsweise weist die Führung 20 mehrere Führungsabschnitte 21 auf. Der Führungsbereich 15 des Führungsrings 10 wird dann durch die Führungsabschnitte 21 geführt. Die Führungsabschnitte 21 umfassen einen Teilbereich des in Figur 1 dargestellten Führungsrings 10. Die Führungsabschnitte 21 können auch als flanschartig abstehende Ringelemente bezeichnet werden. Im bevorzugten Ausführungsbeispiel wird der Führungsring 10 von zwei Führungsabschnitten 21 geführt. Die Führungsabschnitte 21 können verschiedene Längen einnehmen. Besonders gute Resultate wurden mit totalen Führungslängen von 10% bis 40% des Führungsringumfangs erzielt. Grössere Führungslängen sind ebenfalls denkbar, insbesondere ist es möglich, dass die Führungsabschnitte 21 den Führungsring 10 fast ganz umhüllen. Vorzugsweise wird die Führung 20 als Gleitlagerung ausgestaltet.

Aufgrund der oben beschriebenen Führung, welche den Führungsring 10 ganz oder abschnittsweise im Gehäuse 5 führt, hat der Sidestick 1 nur einen einzigen Freiheitsgrad, der eine Rotation um den Mittelpunkt 13 ist. Dies erlaubt dem Benutzer des Eingabegerätes eine sehr einfache Steuerung des Fahrzeuges. Denn bei einer Bewegung des Sidesticks 1, welche hier nur eine Rotation des Sidesticks 1 sein kann, wird nur die Richtung und nicht die Beschleunigung oder Verzögerung eines Fahrzeuges gesteuert. Zur Beschleunigung und Verzögerung dienen andere Bedienelemente, welche unten beschrieben werden.

Ebenfalls kann in Figur 1 erkannt werden, dass der Joystick einstückig ausgestaltet sein kann. Messmittel 12, welche hier beispielsweise Dehnmessstreifen sind, werden im oberen und/oder unteren Bereich des Joysticks, nahe den Enden 11' bzw. 11'' angeordnet. Aufgrund der Messresultate der Dehnmessstreifen kann das auf den Joystick ausgeübte Drehmoment gemessen werden. Andere Messmittel können aber auch eingesetzt werden. Der Joystick ist in den Bereichen der Dehnmessstreifen schlanker ausgestaltet so, dass eine erfassbare Dehnung im entsprechenden Bereich aufgrund eines Drehmomentes resultiert. Der Joystick 1 wird in diesem Fall relativ zum Führungsring bewegt. Diese Relativbewegung resultiert dann in der entsprechenden Dehnung. Bei der Verwendung der Dehnmessstreifen kann alternativ das erste Ende 11' und/oder das zweite Ende 11" des Joysticks 1 gelenkig mit dem Führungsring 10 verbunden sein. Bei einer Verbindung von beiden Enden 11' und 11'' wird der Steg 14 als ganzes in dem Führungsring 10 zu drehen versucht oder gedreht, wobei an den Übergängen das aufgewandte Drehmoment beispielsweise durch die Dehnmessstreifen feststellbar ist.

Bei einer einstückigen Ausgestaltung des Joysticks verspürt der Benutzer beim Ausüben eines Drehmoments noch keine Bewegung des Joysticks. Die Bewegung erfolgt erst bei der Rückmeldung an den Antriebsmotor 3.

Figur 1 zeigt, dass in einem unteren Bereich des Gehäuses 5 das Getriebe 4 und der Antrieb 3 angeordnet sind. Das Getriebe 4 greift in den Führungsring 10 zwischen den beiden Führungsabschnitten 21 ein. Das Getriebe 4 ist ein selbsthemmendes Getriebe, vorzugsweise ein Schneckengetriebe.

Das Schneckengetriebe umfasst ein Schneckenrad 40 und eine Schnecke 42. Eine Eigenschaft eines selbsthemmenden Schneckgetriebes ist, dass das Schneckenrad 40 durch die Schnecke 42 blockiert wird. Ein an das Schneckenrad 40 angelegtes Drehmoment resultiert demnach nicht in einer Bewegung des Schneckenrades 40 bzw. der Schnecke 42. Wird aber ein Drehmoment an die Schnecke 42 angelegt, resultiert dies in einer Bewegung der Schnecke 42 und des Schneckenrades 40.

Die Aussenverzahnung des Schneckenrades 40 ist im Kraftübertragungsbereich 16 des Führungsrings 10 angeordnet. Die Länge der Aussenverzahnung wird vom maximalen Rotationswinkel des Sidesticks 1 bestimmt. Ist dieser Rotationswinkel beispielsweise +/-60°, also insgesamt 120°, so muss die Aussenverzahnung auf einem Winkelsegment von mindestens 120° angeordnet sein.

Die Schnecke 42 ist drehbar im Gehäuse 5 angeordnet und greift in die Aussenverzahnung des Schneckenrades 40 ein. Aufgrund der oben beschriebenen selbsthemmenden Ausgestaltung resultiert ein auf den Sidestick 1 aufgebrachtes Drehmoment nicht in einer Drehung desselben. Die Schnecke 42 ist mit der Abtriebswelle des Antriebes 3 verbunden. Der Antrieb 3 kann eine entsprechende Drehung vorgeben, welche dann als Eingangsgrösse in das Schneckengetriebe dient. Zur Steuerung der Rotationsbewegung des Antriebes 3 und somit des Sidesticks 1 kann eine Steuerung nach einem unten beschrieben Verfahren verwendet.

Falls die Führungsabschnitte 21 des Führungsrings 10 nur auf der gegenüberliegenden Seite der Schnecke 42 angeordnet sind, so übernimmt die Schnecke 42 selbst auch eine Führungsaufgabe. Durch die Befestigung der Lagerung der Schnecke 42 kann der Führungsring gegen die Führungsabschnitte 21 verspannt werden. Dies hat zur Folge, dass sich der Führungsring zu einem leichten Oval deformiert, was eine Spielfreiheit für das Schneckengetriebe zur Folge hat.

Im Gehäuse 5 sind weiter diverse Sensoren zur Messung von verschiedenen Parametern wie folgt angeordnet.

Ein Drehmomentsensor 12, welcher an einem Ende 11 des Sidesticks 1 angeordnet ist, misst das auf den Sidestick 1 ausgeübte Drehmoment. Das ausgeübte Drehmoment dient als Eingangsignal für die Steuerung einer Steuerungsvorrichtung.

Durch das Drehmoment werden die Griffschalen 7 des Joysticks und der vordere Teil 100 des Joysticks gegenüber dem feststehenden hinteren Teil 150 verdreht. Gummipuffer erzeugen dabei eine spürbare Gegenkraft. Der Drehwinkel des Joysticks wird mittels Hallsensoren berührungsfrei gemessen und mittels im Joystick angeordneten Verstärkungselementen verstärkt. Die Magnete 12 des Hallsensors sind am hinteren Teil 150 angeordnet, der Hallsensor ist am vorderen Teil 100 gegenüber den Magneten 12 angeordnet. Aufgrund der Änderung des Drehwinkels ändert sich die Distanz zwischen den Magneten und den Hallsensoren, demnach verändert sich auch die Magnetfeldstärke des Hallsensors. Diese Änderung der Magnetfeldstärke repräsentiert das entsprechende Drehmoment. Im vorliegenden Ausführungsbeispiel sind aus Gründen der Redundanz mehrere, hier drei, Hallsensoren angeordnet.

Alternativ können die Magnete des Hallsensors auch am vorderen Teil 100 und der Hallsensor am hinteren Teil 150 angeordnet werden.

Wird der Joystick für Applikationen verwendet, bei welchen die Redundanz bzw. die dadurch entstehende höher Ausfallsicherheit nicht oberste Priorität hat, wie beispielsweise als Eingabegerät für Computerspiele, so kann das Eingabegerät auch nur mit einem Hallsensor ausgestattet werden.

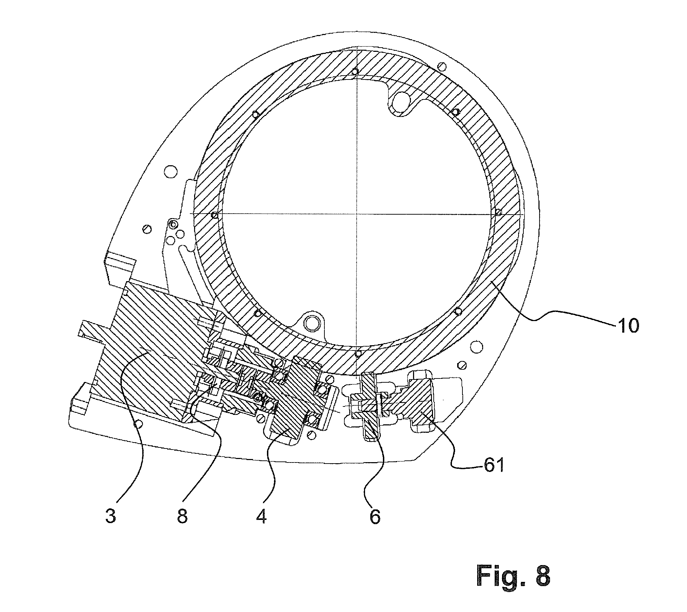

Fig. 8 zeigt eine schematische Schnittdarstellung des erfindungsgemässen Joysticks als alternative Ausführungsform der Figur 1. Gegenüber der Figur 1 ist hier erkennbar, dass zusätzlich zum Schneckengetriebe 4 noch ein weiteres Getriebe 6 angeordnet ist. Das weitere Getriebe 6 ist ein Reduktionsgetriebe zur Positionserfassung des Führungsrings 10 und somit auch des Joysticks 1. Der Führungsring 10 weist eine zweite Verzahnung an dessen Mantelseite auf. In diese zweite Verzahnung greift das Reduktionsgetriebe ein. Es ist aber auch möglich, dass nur eine Aussenverzahnung vorgesehen ist, wobei das Reduktionsgetriebe 6 und das Schneckengetriebe 4 in die gleiche Aussenverzahnung eingreifen.

Der Sensor 8 dient zur inkrementellen Positionserfassung. Die inkrementelle Positionserfassung ist auf der Achse des Antriebs angebracht. Durch die Anordnung vor dem Schneckengetriebe 4 kann die Joystickposition mit einer hohen Auflösung erfasst werden.

Da der inkrementelle Sensor nur die Veränderung der Position, nicht aber die absolute Position messen kann, wird zusätzlich die Joystickposition mit einem Absolutwertgeber (Potentiometer) erfasst. Für den Absolutwertgeber ist auf dem Führungsing 10 die zweite Verzahnung angebracht, so dass der maximale Bewegungswinkel des Joysticks auf den maximalen Winkel des Potentiometers übersetzt wird.

Die absolute Positionserfassung misst die Joystickposition in der Initialisierungsphase des Systems, während die inkrementelle Positionserfassung den Joystickwinkel während des Betriebs misst. Für die absolute Erfassung der Position ist das Reduktionsgetriebe 6 mit einem Potentiometer 61 verbunden. Das Potentiometer 61 weist abhängig von der Position des Reduktionsgetriebes einen anderen elektrischen Widerstand auf. Aufgrund dieses elektrischen Widerstandes kann die Position des Joysticks 1 absolut bestimmt werden.

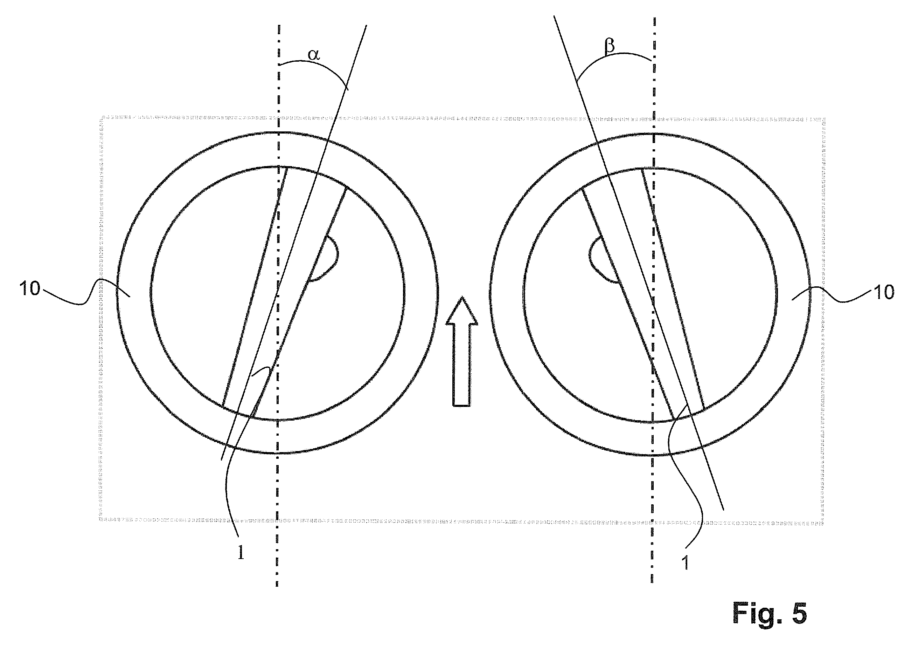

In der zum Lenksystem gehörenden Steuerung können verschiedene Parameter eingestellt werden, welche das System speziell auf den Fahrer anpassen:
- Kraftverstärkung: Das mit der Drehmomenterfassung gemessene Drehmoment wird mit diesem Faktor multipliziert und ermöglicht damit das Lenken auch für Personen mit stark eingeschränktem Kraftvermögen.
- Kraftverstärkung richtungsabhängig: Die Verstärkung des gemessenen Drehmomentes kann bei Bedarf richtungsabhängig ausgeführt werden.
- Geradeausfahr-Offset: ergonomische Einstellung der geradeaus-Stellung des Joysticks (Weiter hinten im Zusammenhang mit Figur 5 beschrieben)
- Maximaler Bewegungswinkel Uhrzeigersinn/Gegenuhrzeigersinn: Verhindert, dass Joystick aus ergonomischer Position fahren kann.
- Wegverstärkung Uhrzeigersinn / Gegenuhrzeigersinn: Das Verhältnis von Radposition zu Joystickposition Links/bzw. Rechts der Geradeausfahr-Position ist individuell einstellbar.

Die Figur 2 zeigt eine perspektivische Ansicht eines erfindungsgemässen Sidesticks 1, wobei der Sidestick für einen Rechtshänder ausbildet ist.

Das Gehäuse 5 umgibt den Führungsring 10 mit dem Sidestick 1 in vollständiger Weise. Dies hat den Vorteil, dass der Sidestick gegen unbeabsichtigte Lenkbewegungen geschützt ist und diese somit minimiert werden können. Beispielsweise können lose Gegenstände im Fahrzeug den Sidestick nicht einer Weise berühren, dass unbeabsichtigte Lenkmanöver durchgeführt werden.

Weiter kann der Führungsring 10 eine nicht gezeigte Handauflage umfassen, welche es dem Benutzer erlaubt, seine Hand bzw. den vorderen Bereich des Arms aufzustützen. Diese Handauflage dreht bei einer Positionsänderung des Joysticks mit.

Auf der linken Aussenseite 302 des Steges 14 ist ein Multifunktionsschalter 19 dargestellt, auf welcher der Daumen zu liegen kommt. Diesem Multifunktionsschalter 19 können unterschiedlichste sekundäre Funktionen zugeordnet werden. Sekundäre Funktionen sind Funktionen, welche nicht direkt mit dem Lenkvorgang eines Fahrzeuges zusammenhängen, wie beispielweise Blinker, Scheibenwischer, Licht, Zündung des Motors etc. Der Multifunktionsschalter 19 ist in den Griffschalen 7 des Joysticks angeordnet.

Der beschriebene Multifunktionsschalter kann als 4- oder 5-Wege-Taster ausgeführt sein. Dies erlaubt die Steuerung mehrerer Funktionen mit diesem einen Schalter.

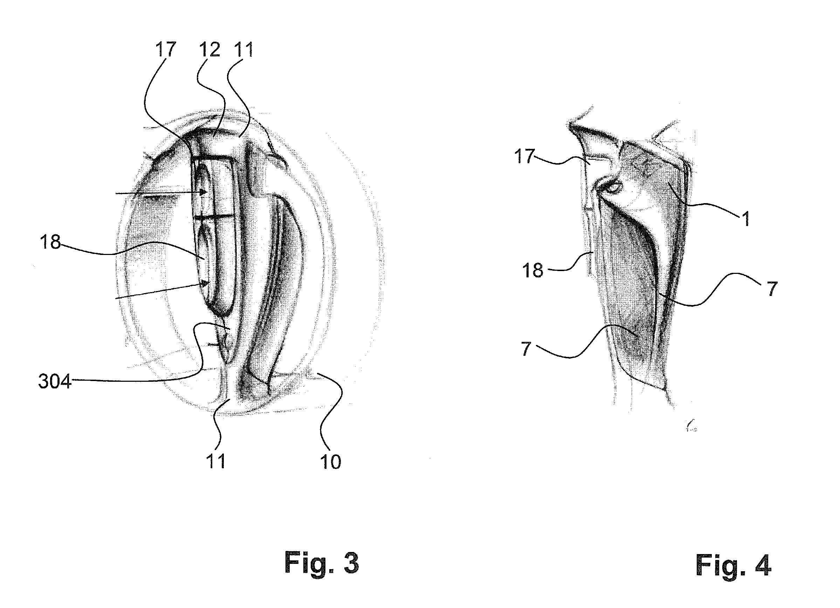

Figuren 3 und 4 zeigen den Steg 14 oder Joystick des erfindungsgemässen Eingabegerätes in weiteren perspektivischen Ansichten, wobei insbesondere die beiden Tasten 18 und 19 gezeigt werden. Aufgrund der ergonomischen Ausgestaltung des Steges 14 kann der Sidestick 1 von der Hand des Benutzers besonders gut ergriffen bzw. umgriffen werden. Der Benutzer greift von vorne in den Führungsring 10 ein und umfasst den Sidestick. Dies ist mit einem Pfeil 300 gezeigt. Mit dem Daumen umgreift der Benutzer die eine Seite 302 des Sidesticks 1 und mit den anderen vier Fingern die andere Seite 303. Vorzugsweise ist der Sidestick 1 so dimensioniert, dass es dem Benutzer ermöglicht wird, den Sidestick fast vollständig zu umgreifen.

Um eine Lenkbewegung auszuführen, muss der Benutzer sein Handgelenk in die gewünschte Richtung drehen. Dadurch wird dem Sidestick ein Drehmoment angelegt. Indem das Drehmoment einstellbar empfindlich gemessen wird, handelt es sich bei der Lenkbewegung um eine Bewegung, welche nur sehr wenig Kraft des Benutzers erfordert, was eine längere Benutzung des Sidesticks 1 erlaubt. Der Benutzer kann also längere Strecken mit einem Fahrzeug fahren, welches über die erfindungsgemässen Eingabegeräte verfügt.

Weiter ist in den Figuren zudem ersichtlich, dass der Sidestick 1 weitere Tasten aufweist. Auf der Hinterseite 304 des Sidesticks 1 sind zwei Tasten 17, 18 übereinander angeordnet. Diese beiden Tasten 17, 18 können durch den Benutzer betätigt werden. Die obere Taste 17 dient zur Steuerung der Beschleunigung des Fahrzeuges und wird auch als Beschleunigungstaste 17 bezeichnet. Die Beschleunigungstaste 17 kann vom Benutzer mit dem Zeigefinger und/oder dem Mittelfinger betätigt werden. Die untere Taste 18 dient zur Steuerung der Verzögerung des Fahrzeuges und wird auch als Verzögerungstaste 18 bezeichnet. Die Verzögerungstaste 18 kann vom Benutzer mit dem Ringfinger und/oder dem kleinen Finger betätigt werden.

Die beiden Tasten 17, 18 können auch als eine Wippe 103 ausgestaltet sein. Die Wippe 103 ist mit dem vorderen Teil 100 verbunden und kann somit die Rotationsbewegung des vorderen Teils 100 bzw. der Griffschalen kompensieren, was es dem Benutzer erlaubt, die Wippe in einfacher Weise zu bedienen. Die mechanische Ausgestaltung der Wippe 103 kann auch in Figur 6a bis 6c erkannt werden. Die Bewegung der Wippe 103 kann mittels Positionssensoren erkannt werden. Vorzugsweise werden Hallsensoren eingesetzt, welche in einem oberen Bereich 103' und/oder in einem unteren Bereich 103'' der Wippe 103 angeordnet sind. Die Wippe 103 ist an deren Mitte 104 gelagert. Nicht gezeigte Federmittel, welche oberhalb und unterhalb der Mitte 104 der Wippe 103 angeordnet sind, bewirken eine Federkraft auf die Wippe 103, so dass diese nach einer Betätigung die Nullstellung wieder einnehmen kann. Der obere Teil der Wippe 103' dient als Eingabe für die Beschleunigung und der untere Teil 103'' der Wippe dient als Eingabe der Verzögerung. Diese Eingabe kann aber benutzerspezifisch angepasst werden. Es ist demnach auch möglich, dass der untere Teil 103'' zur Eingabe der Beschleunigung dient. Die Wippe 103 hat den Vorteil, dass nur ein Bauteil für die Regelung der Fahrzeuglängsbeschleunigungen verwendet werden muss. Zudem ist eine gleichzeitige Betätigung der Beschleunigung und Verzögerung ausgeschlossen.

Zur Beschleunigung oder Verzögerung des Fahrzeuges wird die Wippe 103 mit den Fingern der Funktion entsprechend gedrückt. Mittels Hallsensoren wird der Betätigungsweg berührungslos gemessen. Mit Federn wird der Betätigungskraft entgegengewirkt. Sobald die Wippe 103 losgelassen wird, geht der Motor in den Leerlauf bzw. die Bremse wird gelöst.

Das Fahrzeug kann natürlich auch über herkömmliche Pedale verzögert oder beschleunigt werden. In einem solchen Fall dient das erfindungsgemässe Eingabegerät nur zur Eingabe einer Lenkbewegung. Die Wippe 103 bzw. die Schalter 17 und 18 entfallen dann oder können andere Funktionen einnehmen.

Das Eingabegerät gemäss der vorliegenden Erfindung kann einzeln oder paarweise in ein Fahrzeug eingebaut werden. Figur 5 zeigt schematisch den paarweisen Einbau von erfindungsgemässen Eingabegeräten und verdeutlicht den einstellbaren Offset. In Wirklichkeit liegen die beiden Eingabegeräte in einer Distanz zueinander, wobei die Distanz entsprechend den ergonomischen Bedürfnissen des Fahrers eingestellt werden kann. Insbesondere entspricht die Distanz zwischen zwei Eingabegräten etwa der Schulterbreite eines Benutzers. Andere Distanzen sind auch denkbar.

Wird das Eingabegerät paarweise in ein Fahrzeug eingebaut, befindet sich je ein Eingabegerät auf je einer Seite des Fahrers. Das heisst also, dass links und rechts von Fahrer je ein Eingabegerät angeordnet ist und dass der Fahrer zwei Sidesticks bedienen kann. Die ergonomische Ausgestaltung des Sidesticks 1 ist dabei an die entsprechende Seite angepasst. Der auf der linken Seite angeordnete Sidestick ist anders ausgestaltet, als der auf der rechten Seite angeordnete Sidestick. Das erfindungsgemässe Eingabegerät kann zudem klappbar in einem Fahrzeug angeordnet werden. Hier ist wiederum besonders vorteilhaft, dass das Eingabegerät bzw. der Sidestick gegen unbeabsichtigte Bewegungen durch das Gehäuse geschützt ist.

Fahrzeuge, welche mit einem konventionellen Lenksystem ausgerüstet sind, können mit dem erfindungsgemässen Eingabegerät nachträglich ausgestattet werden. Vorzugsweise wird aber das konventionelle Lenksystem nicht von Fahrzeug entfernt, denn dann kann das Fahrzeug auch von einem Fahrer benutzt werden, welcher das erfindungsgemässe Eingabegerät nicht bedienen kann.

Aufgrund der nabenlosen Bauform kann ein Eingabegerät gemäss der vorliegenden Erfindung sehr kompakt und somit platzsparend ausgestaltet werden.

Figur 5 zeigt eine beispielhafte Sidestick-Stellung. Eine solche Anordnung wird beispielsweise dann verwendet, wenn zwei Sidesticks 1 in einem Fahrzeug verwendet werden. Die beiden Sidesticks 1 sind hier in der Nulllage gezeigt, also dann wenn kein Drehmoment auf die Sidesticks ausgeübt wird. Ist der Sidestick 1 in der Nulllage, so stehen die Räder gerade und das Fahrzeug kann sich geradeaus bewegen.

Die Nulllage des Sidesticks kann mittels einem Offset nach den Bedürfnissen des Benutzers individuell eingestellt werden. Wie in Figur 5 erkennbar, steht der linke Joystick mit einem Winkel α und der rechte Joystick mit einem Winkel β zur Vertikalen.

Dies erlaubt eine besonders ergonomische und natürliche Anpassung an die Handposition des Fahrers. Die Einstellung der Nulllage kann beispielsweise durch das Setzen eines Kompensationsfaktors oder Offset-Faktors, welcher dem Benutzer angepasst ist, ausgeführt werden. Der Kompensationsfaktor muss von der Steuerung des Sidesticks entsprechend berücksichtigt werden.

Vorzugsweise steht der Sidestick in der Nulllage vertikal oder einem Winkel α bzw. β zur Vertikalen. Zur Steuerung eines Fahrzeuges hat es sich als Vorteilhaft erwiesen, den maximalen Rotationswinkel des Sidesticks zu begrenzen. Beispielsweise kann der Rotationswinkel 180° sein. In diesem Fall kann der Sidestick dann 90° auf die eine Seite, also im Gegenuhrzeigersinn, und 90° auf die andere Seite, also im Uhrzeigersinn, rotiert werden. Auch mit einem Rotationswinkel von 90°, also 45° im Gegenuhrzeigersinn und 45° im Uhrzeigersinn, wurden gute Resultate erzielt. Andere Rotationswinkel sind ebenfalls denkbar. Vorteilhafterweise ist der Rotationswinkel nicht kleiner als 30°. Auch der maximale Rotationswinkel kann benutzerabhängig eingestellt werden.

Figur 6 zeigt in einem Flussdiagramm ein Verfahren zur Steuerung eines Fahrzeuges mit einem erfindungsgemässen Eingabegerät.

In einem ersten Schritt 401 bringt der Benutzer ein Drehmoment in die gewünschte Richtung auf den Sidestick 1 bzw. über den Sidestick 1 auf den Führungsring 10 auf. Aufgrund des selbsthemmenden Getriebes 4 kann der Sidestick 1 keine Rotationsbewegung ausüben.

In einem zweiten Schritt 402 wird das vom Benutzer aufgebrachte Drehmoment mittels einem Drehmomentsensor 12 gemessen. Der Drehmomentsensor 12 gibt ein elektrisches Signal aus, welches das aufgebrachte Drehmoment repräsentiert. Deshalb wird das entsprechende Signal als Drehmomentsignal bezeichnet.

Das Drehmomentsignal wird dann in einem dritten Schritt 403 einer Steuerung übermittelt, welche aufgrund des Drehmomentsignals einen elektrischen Antrieb ansteuert. Dieser Antrieb ist über ein nichthemmendes Getriebe, im Ausführungsbeispiel ein nichthemmendes Schneckengetriebe, mit der Lenksäule verbunden. Die Lenksäule wird mit diesem Antrieb mit einem Drehmoment beaufschlagt. Ist das angelegte Drehmoment an der Lenksäule höher als die Gegenkraft an den Rädern, beginnen sich die Räder zu bewegen. Die Räder werden dann in herkömmlicher Weise in die Gewünschte Position gebracht. Der Fahrer regelt dabei die Position der gelenkten Räder, indem er laufend die Fahrtrichtung prüft.

Der Antrieb an der Lenksäule kann zu Gunsten der Sicherheit mehrfach in paralleler Weise ausgeführt werden, so dass bei einem allfälligen Fehler in einem Antrieb ein anderer Antrieb die Funktion übernehmen kann.

Werden zwei Eingabegeräte in einem Fahrzeug eingesetzt, wird das am linken Eingabegerät erfasste Drehmoment mit dem am rechten Eingabegerät erfassten Drehmoment zusammenaddiert Das resultierende Drehmoment wird dann als Drehmomentsignal verwendet. Die Messwerte können zudem von der Steuerung unterschiedlich gewichtet werden, das heisst, dass beispielsweise das am linken Eingabegerät gemessene Drehmoment eine höhere Gewichtung auf das Drehmomentsignal hat, als das am rechten Eingabegerät gemessene Drehmoment. Diese Gewichtung kann, wie alle Parameter, benutzerspezifisch eingestellt werden.

Durch die Addition der Drehmomente können auch sinnlose Betriebszustände egalisiert werden. Ein solcher sinnloser Betriebszustand ist beispielweise, wenn am linken Eingabegerät ein positives Drehmoment und am rechten Eingabegerät ein negatives Drehmoment eingegeben wird. Da die Drehmomente mit ihrer Richtung, also mit den entsprechenden Vorzeichen, addiert werden fallen solche sinnlosen Betriebszustände nicht ins Gewicht. Das Verhalten kann mit einem herkömmlichen Lenksystem, wie beispielsweise einem Lenkrad verglichen werden. Auch bei einem Lenkrad kann der Benutzer mit einer Hand der anderen unterstützend helfen oder aber die Lenkbewegung hemmen.

Das Drehmomentsignal kann mittels individuell einstellbaren Parametern dem Benutzer angepasst werden. Werden die Eingabegeräte von einer Person bedient, welche aufgrund einer Behinderung nur eine sehr kleine Kraft auf den Sidestick aufbringen kann, wird das gemessene Drehmoment mit Verstärkungsfaktoren korrigiert werden.

Solche Verstärkungsfaktoren können für jedes einzelne Eingabegerät eingestellt werden. Das heisst, dass das linke Eingabegerät mit anderen Faktoren korrigiert werden kann als das rechte Eingabegerät.

Zudem können die Verstärkungsfaktoren auch in beiden Bewegungsrichtungen, also im Gegenuhrzeigersinn oder im Uhrzeigersinn, einen unterschiedlichen Wert einnehmen.

In einem vierten Schritt 404 wird die Position der Lenksäule und damit die der Räder des Fahrzeuges erfasst.

Für die Erfassung der Position der Lenksäule können Absolutwertgeber, wie beispielsweise Potentiometer und inkrementelle Winkelsensoren eingesetzt werden. Diese Sensoren sind im Gehäuse der Lenksäulen-Aktuatorik untergebracht. Die Anordnung der Sensoren kann dabei in ähnlicher Weise, wie beim Eingabegerät schon beschrieben erfolgen. Die Position wird über eine doppelte Verzahnung auf den Absolutwertgeber und den Inkremtalsensor geleitet. Dadurch kann die absolute und auch die inkrementelle Position erfasst werden.

Die gemessene Position resultiert in einem elektrischen Signal, welches hier als Positionssignal bezeichnet wird. Das Verhältnis der Positionsänderung von Lenksäule zu Joystick ist frei bestimmbar und kann in einer entsprechenden Steuerung implementiert werden.

In einem fünften Schritt 405 wird das Positionssignal über ein Steuergerät an das Antriebsmittel 3 des Sidesticks 1 weitergegeben. Das Antriebsmittel 3 führt eine entsprechende Drehung aus. Über das Schneckengetriebe 4 wird der Sidestick 1 anhand dieser Bewegung positioniert. Die Rückmeldung der Einstellung der Räder an den Benutzer folgt also über eine Verstellung des Rotationswinkels des Sidesticks 1.

Sensoren am Eingabegerät und an der Lenksäule können die Rotationsbewegungen zusätzlich überwachen. Beispielsweise kann eine in der Steuerung des Lenksystems programmierte Überwachung anhand der Drehmoment- und Positionssensoren das Zusammenspiel von Joystick und Lenkaktuatorik überwachen. Insbesondere ist eine Plausibilitätsprüfung des am Joystick herrschenden Drehmomentes und des an der Lenksäule herrschenden Drehmomentes sowie die Plausibilisierung der Joystickposition anhand der Lenksäulenposition möglich.

Eine Änderung des Joystickdrehmomentes hat auch eine Änderung des Lenksäulendrehmomentes zur Folge. Wenn also der Fahrer das Drehmoment am Joystick abbaut, dann wird das an der Lenksäule erzeugte Drehmoment ebenfalls verringert. Die Lenkung bewegt sich nun aufgrund der Kräfte, welche auf die gelenkten Räder oder aufs Lenkrad wirken. Wenn sich das Fahrzeug in einer Kurve befindet und dann das Drehmoment am Joystick verringert wird, bewegt sich die Lenkung aufgrund der Konstruktion der Radaufhängung selbsttätig in die Mittelposition zurück, sofern keine Störkraft diese Bewegung verhindert. Das Verhalten ist wie bei einem herkömmlichen Lenksystem, wenn man das Lenkrad loslässt. Falls im Lenksystem ein Fehler auftritt, kann der Sidestick an der aktuellen Position angehalten werden. Für den Fahrer ist es weiterhin möglich, ein Drehmoment auf den Sidestick zu geben. Die Position des Sidesticks wird dann aber nicht mehr angepasst, die Lenkfunktion bleibt trotzdem erhalten. Über optische und/oder akustische Warnmittel wird dem Fahrer signalisiert, dass ein Fehler aufgetreten ist.

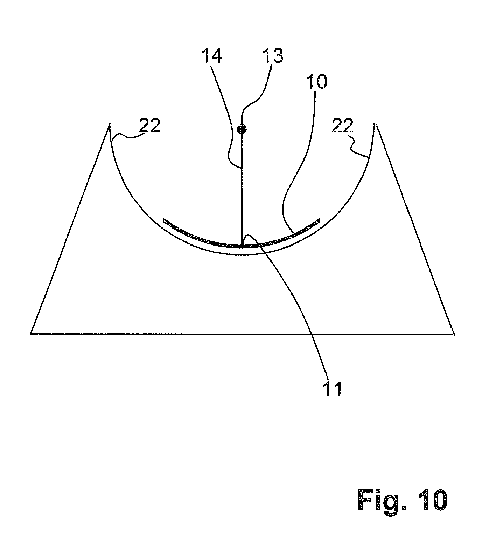

Figur 10 zeigt schematisch eine weitere alternative Ausführungsform gemäss der vorliegenden Erfindung. Der Führungsring 10 ist hier als Ringsegment ausgebildet. Der Handgriff 14 ist in demnach nur an einen Ende 11 mit dem Führungsring 10 verbunden. Gehäuseränder 22 erstrecken in sich in vertikaler Richtung über den Mittelpunkt 13 des Führungsrings 10. Somit wird auch in diesem Ausführungsbeispiel der Sidestick 1 vor unerwünschten Bewegungen geschützt. Drehmomentsensoren können beispielsweise als Dehnmessstreifen links oder rechts an den Handgriff 14 befestigt werden.

Die Ausgestaltung des Getriebes und des Antriebs und auch der Funktion sind identisch zu den vorhergehenden Ausführungsbeispielen.

In einer weiteren Ausführungsform ist der Sidestick so ausgestaltet wie in Figur 10. Das Gehäuse jedoch umgibt den Sidestick vollständig.

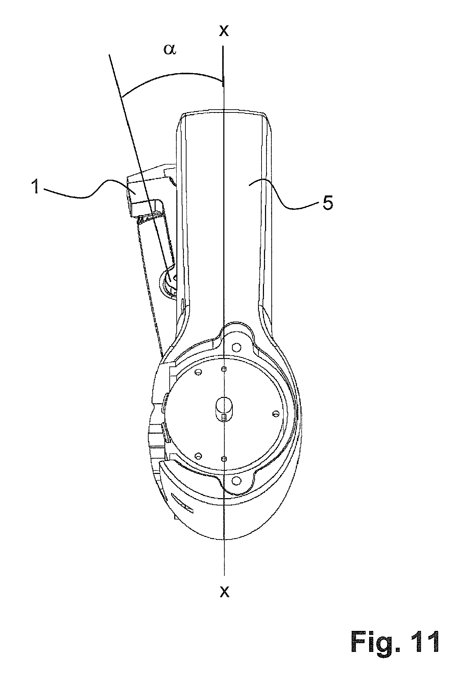

In einer weiteren Ausführungsform, welche in Figur 11 dargestellt ist, ist der Joystick 1 mit einem Winkel α zur Mittelachse X-X des Gehäuses 5 angeordnet. Der Winkel α ist vorzugsweise kleiner als 20°, falls sich der Joystick 1 auf die eine Seite neigt, bzw. -20°, falls sich der Joystick 1 auf die andere Seite neigt. Insbesondere kleiner als 10° bzw. -10°. Besonders bevorzugt neigt sich der Joystick aber nur gegen die Fahrzeugfront, womit das Risiko einer unachtsamen bzw. ungewollten Betätigung sehr klein gehalten wird. Die Neigung des Joysticks erlaubt eine ergonomische Anpassung an den Benutzer.

In der besonderes bevorzugten Ausführungsform steht der Joystick aber parallel zur Mittelachse.

### Bezugszeichenliste

- 1: Joystick / Sidestick
- 2: Führung
- 3: Elektromotor
- 4: Schneckengetriebe
- 5: Gehäuse
- 6: Reduktionsgetriebe
- 7: Griffschalen
- 8: Positionserfassung
- 10: Führungsring
- 11: Enden
- 12: Drehmomentsensor
- 13: Drehpunkt
- 14: Handgriff oder Steg
- 15: Führungsbereich
- 16: Kraftübertragungsbereich
- 17: Beschleunigungstaste
- 18: Verzögerungstaste
- 19: Weitere Taste
- 20: Führung
- 21: Führungsabschnitte
- 22: Gehäuseränder
- 40: Aussenverzahnung Führungsring
- 41: Aussenverzahnung Schnecke
- 42: Schnecke
- 61: Potentiometer
- 100: vorderer Teil des Joysticks
- 101: Drehpunkt
- 102: Führung für Gummipuffer
- 103: Wippe
- 104: Drehpunkt der Wippe
- 150: hinterer Teil des Joysticks
- 200: Eingriffrichtung
- 401-404: Verfahrensschritte

## Patentansprüche

1. Eingabegerät für ein elektronisches Lenksystem eines Fahrzeuges umfassend mindestens einen Sidestick (1) zur Eingabe eines Steuerungsbefehls, Messmittel zur Messung des Steuerungsbefehls und Rückmeldemittel zur Rückmeldung von Richtungsparametern, **dadurch gekennzeichnet, dass** der Sidestick (1) an mindestens einem Ende (11) mit einem Führungsring (10) verbunden ist, der den Sidestick (1) mindestens teilweise umgibt.

2. Eingabegerät nach Anspruch 1, **dadurch gekennzeichnet, dass** der Sidestick (1) an einem oder dem anderen Ende (11) mit dem Führungsring (10) derart verbunden ist, dass eine Ausübung eines Drehmomentes auf den Sidestick (1) durch die Messmittel feststellbar ist.

3. Eingabegerät nach einem der vorhergehenden Ansprüche, **dadurch gekennzeichnet, dass** der Führungsring (10) in einer Führung (21) um eine Achse drehbar gelagert ist.

4. Eingabegerät nach einem der vorhergehenden Ansprüche, **dadurch gekennzeichnet, dass** die Rückmeldemittel ein selbsthemmendes Getriebe (4) zur Blockierung einer Drehung des Führungsrings (10) bei Ausübung eines Drehmomentes auf den Sidestick (1) umfassen.

5. Eingabegerät nach einem der vorhergehenden Ansprüche, **dadurch gekennzeichnet, dass** die Messmittel einen Drehmomentsensor (12) umfassen, mit welchem ein auf den Sidestick (1) aufgebrachtes Drehmoment (M) messbar ist.

6. Eingabegerät nach einem der vorhergehenden Ansprüche, **dadurch gekennzeichnet, dass** der Sidestick mindestens ein Bedienelement (17,18) zur Steuerung der Beschleunigung und/oder Verzögerung eines Fahrzeuges aufweist.

7. Eingabegerät nach einem der vorhergehenden Ansprüche, **dadurch gekennzeichnet, dass** der Sidestick (1) einen vorderen Teil (100) und einen hinteren Teil (150) umfasst, wobei das hintere Teil (150) mit dem Führungsring (10) verbunden ist, und dass der vordere Teil (100) gegenüber dem hinteren Teil (150) drehbar gelagert ist.

8. Eingabegerät nach Anspruch 7, **dadurch gekennzeichnet, dass** Griffschalen (7) mit dem vorderen Teil (100) verbunden sind, so dass ein auf die Griffschalen (7) ausgeübtes Drehmoment auf das vordere Teil (100) übertragbar ist.

9. Verfahren zum Steuern eines Fahrzeuges mit einem Eingabegerät nach Ansprüchen 1 bis 6, **dadurch gekennzeichnet, dass** zur Betätigung der Lenkung in einem ersten Schritt (401) durch den Benutzer ein Drehmoment auf den Sidestick aufgebracht wird, und dass in einem zweiten Schritt (402) das Drehmoment als Drehmomentsignal gemessen wird, und dass in einem dritten Schritt (403) das Drehmomentsignal zur Regelung einer Position einer Lenkung des Fahrzeuges verwendet wird.

10. Verfahren zum Steuern eines Fahrzeuges nach Anspruch 9, **dadurch gekennzeichnet, dass** in einem vierten Schritt (404) die Position der Lenkung gemessen wird und ein entsprechendes Positionssignal generiert wird, und dass in einem fünften Schritt (405) der Sidestick in eine Position gebracht wird, in welcher diese Position der Position der Lenkung entspricht.
